# EUROPÄISCHE PATENTANMELDUNG

(11) **EP 3 051 180 A1**
(43) Veröffentlichungstag der Anmeldung: **03.08.2016**
(21) Anmeldenummer: 16153216.3
(22) Anmeldetag: 28.01.2016
(51) Int. Cl.: F16H 25/24

(54) **GETRIEBEANORDNUNG**

(30) Priorität: 29.01.2015 DE 102015201501
(71) Anmelder: Aktiebolaget SKF, 41 550 Göteborg (SE)
(72) Erfinder: Voegelin, Martin, 4457 Diegten (CH); Di_Stefano, Enrico, 10098 Rivoli TO (IT)
(74) Vertreter: Kuhstrebe, Jochen

(57) **Zusammenfassung**

Die Erfindung betrifft eine Getriebeanordnung (1), umfassend mindestens eine Getriebewelle (2), die um eine Drehachse (a) drehbar in einem Gehäuseelement (3) angeordnet ist, wobei die Getriebewelle (2) konzentrisch mit einem Bremselement (4) verbunden ist, wobei das Bremselement (4) drehfest im Gehäuseelement (3) angeordnet ist, so dass mittels des Bremselements (4) zwischen der Getriebewelle (2) und dem Gehäuseelement (3) ein Bremsdrehmoment übertragen werden kann. Um das Bremselement in einfacher Weise am optimalen Ort platzieren zu können und das Getriebeelement möglichst modular gestalten zu können, sieht die Erfindung vor, dass die drehfeste Befestigung des Bremselements (4) im Gehäuseelement (3) mittels mindestens zweier Befestigungselemente (5, 6) erfolgt, die von der Drehachse (a) radial beabstandet sind und die an korrespondierenden Befestigungsstellen (7, 8) des Gehäuseelements (3) festlegbar sind, wobei mehr Befestigungsstellen (9, 10, 11, 12) am Gehäuseelement (3) als Befestigungselemente (5, 6) vorhanden sind, so dass das Bremselement (4) in verschiedenen Positionen betreffend die Lage der Drehachse (a, a', a") am Gehäuseelement (3) festlegbar ist.

## Beschreibung

Die Erfindung betrifft eine Getriebeanordnung, umfassend mindestens eine Getriebewelle, die um eine Drehachse drehbar in einem Gehäuseelement angeordnet ist, wobei die Getriebewelle konzentrisch mit einem Bremselement verbunden ist, wobei das Bremselement drehfest im Gehäuseelement angeordnet ist, so dass mittels des Bremselements zwischen der Getriebewelle und dem Gehäuseelement ein Bremsdrehmoment übertragen werden kann.

Gattungsgemäße Getriebeanordnungen werden beispielsweise in Aktuatoren, insbesondere in Linearaktuatoren, eingesetzt, wobei eine Drehbewegung übersetzt werden muss. Für die einwandfreie und sichere Funktion ist eine mechanische Bremse manchmal nötig, die letztlich an einer beliebigen Stelle des Antriebsstrangs platziert werden kann, um eine unerwünschte bzw. ungewollte (Dreh)Bewegung der Anordnung zu verhindern. Eine bevorzugte Stelle für die Bremse ist der Motor oder die Hauptgewindespindel. Allerdings gibt es teils auch Einschränkungen bezüglich der Anordnung der Bremse, beispielsweise hinsichtlich des benötigten Bremsdrehmoments oder der Drehgeschwindigkeit des abzubremsenden Bauteils bzw. bezüglich des verfügbaren Bauraums. In solchen Fällen kann die Bremse auch an Zwischenwellen des Getriebeelements angeordnet werden. Allerdings ist hier bislang die Variationsvielfalt stark begrenzt, da die bislang üblichen Bremselemente eine Lagerstelle (Lagerhülse) im Gehäuseelement des Getriebeelements benötigen.

Wenn das Bremselement, was üblich ist, direkt am Gehäuseelement des Getriebeelements an einer festen Position angeordnet wird, steht zumeist der benötigte Bauraum für die Bremse zur Verfügung. Dies begrenzt allerdings die Möglichkeit, das Übersetzungsverhältnis des Getriebeelements zu variieren, was häufig gewünscht ist.

Der Erfindung liegt die Aufgabe zugrunde, eine gattungsgemäße Getriebeanordnung so auszubilden, dass es in einfacher Weise möglich ist, das Bremselement in gewissen Grenzen an dem Ort anzuordnen, an dem es optimal wirken kann und gleichzeitig eine möglichst kompakte Bauweise haben kann. Weiterhin soll es möglich sein, bei dieser Konzeption das Getriebeelement möglichst modular gestalten zu können. Damit soll es möglich werden, das Bremselement an verschiedenen Positionen im Getriebeelement anzuordnen, was in Abhängigkeit eines gewünschten Übersetzungsverhältnisses erfolgen kann.

Die **Lösung** dieser Aufgabe durch die Erfindung ist dadurch gekennzeichnet, dass die drehfeste Befestigung des Bremselements im Gehäuseelement mittels mindestens zweier Befestigungselemente erfolgt, die von der Drehachse radial beabstandet sind und die an korrespondierenden Befestigungsstellen des Gehäuseelements festlegbar sind, wobei mehr Befestigungsstellen am Gehäuseelement als Befestigungselemente vorhanden sind, so dass das Bremselement in verschiedenen Positionen betreffend die Lage der Drehachse am Gehäuseelement festlegbar ist.

Das Bremselement weist bevorzugt ein Gehäuse auf, an dem radial herausragend die Befestigungselemente angeordnet sind; das Gehäuse des Bremselements weist dabei bevorzugt eine im wesentlichen hohlzylindrische Form auf. Die Befestigungselemente und das Gehäuse sind bevorzugt einstückig ausgebildet.

Die Befestigungselemente sind dabei besonders bevorzugt als flanschartige Laschen ausgebildet. Sie können mit den Befestigungsstellen verschraubt sein.

Gemäß einer bevorzugten Ausführungsform der Erfindung sind zwei Befestigungselemente und vier oder sechs Befestigungsstellen vorhanden. Damit kann das Bremselement bzw. die gebremste Welle in einfacher Weise in zwei oder drei verschiedenen Lagen festgelegt werden. Natürlich sind auch andere Möglichkeiten für die Zahl der Befestigungselemente und der Befestigungsstellen gegeben.

Die Befestigungsstellen sind dabei bevorzugt so am oder im Gehäuseelement angeordnet, dass die Lage der Drehachse beim Anbringen der Befestigungselemente an unterschiedlichen Befestigungsstellen um maximal 15 mm variiert, vorzugsweise um maximal 5 mm. Diese Werte können natürlich auch anders gewählt werden; jedenfalls wird damit eine einfache Anpassung an gewünschte Verhältnisse bzw. Getriebeübersetzungen möglich.

Die Getriebewelle kann dabei mit einem ihrer axialen Enden in einem Lagerelement gelagert sein, das das Bremselement zumindest teilweise durchsetzt oder im Bremselement angeordnet ist und im Gehäuseelement befestigt ist. Das Lagerelement kann beispielsweise ein Wälzlager oder eine Gleitlagerbuchse sein.

Die Erfindung ermöglicht es also, ein mechanisches Bremselement und seine Anbringung am bzw. im Gehäuseelement des Getriebeelements so zu gestalten, dass eine flexible Positionierung möglich ist.

Das Bremselement, das bevorzugt aus einem zylindrischen Gehäuse besteht, in dem ein Bremselement samt Führung angeordnet ist, ermöglicht somit eine Befestigung in verschiedenen vorbestimmten Positionen, so dass sich die Lage der Drehachse verändern lässt. Dies erlaubt es, das Getriebeelemente modular aufzubauen und in einfacher Weise für verschiedene Übersetzungsverhältnisse auszulegen.

Das erfindungsgemäße Getriebeelement kommt bevorzugt in Aktuatoren, insbesondere in Linearaktuatoren, zum Einsatz.

Somit kann das Getriebeelement in einfacherer Weise als bisher für verschiedene Übersetzungsverhältnisse ausgebildet werden. Es können Getriebeelemente mit vorgegebenen Übersetzungsverhältnissen hergestellt werden. Die Welle, die vom Bremselement abgebremst wird, kann in einer Lagerstelle gelagert werden, die im Bremselement selber ausgebildet wird, so dass diese Lagerstelle bei verschiedener Positionierung des Bremselements, wie erläutert, ebenfalls verändert wird.

Das Bremselement kann dann in einem spezifischen Gehäuseelement in der benötigten Lage montiert werden. Dabei wird die benötigte hohe Präzision für die Abstände der Wellen voneinander gewährleistet. Mit der genauen Festlegung bzw. Montage des Bremselements liegt dann auch die genaue Lage der Drehachse samt deren Lagerung fest.

Das mechanische Bremselement kann in kompakter Weise aufgebaut sein, d. h. es hat ein Gehäuse, in dem die eigentliche Bremse und auch die Lagerung für eine Zwischenwelle angeordnet sind.

In den Zeichnungen ist ein Ausführungsbeispiel der Erfindung dargestellt. Es zeigen:
- Fig. 1: im Schnitt ein Getriebeelement, in dem mehrere Getriebewellen drehbar gelagert ist, wobei eine der Getriebewellen mit einem Bremselement verbunden ist,
- Fig. 2: in perspektivischer Darstellung das oben geöffnete Gehäuseelement des Getriebeelements, in dem das Bremselement in einer ersten Einbaulage angeordnet ist,
- Fig. 3: die Draufsicht auf das geöffnete Getriebeelement, wobei das Bremselement in der ersten Einbaulage angeordnet ist, und
- Fig. 4: in der Darstellung ähnlich zu Fig. 3 das Bremselement, für das verschiedene Einbaulagen angedeutet sind.

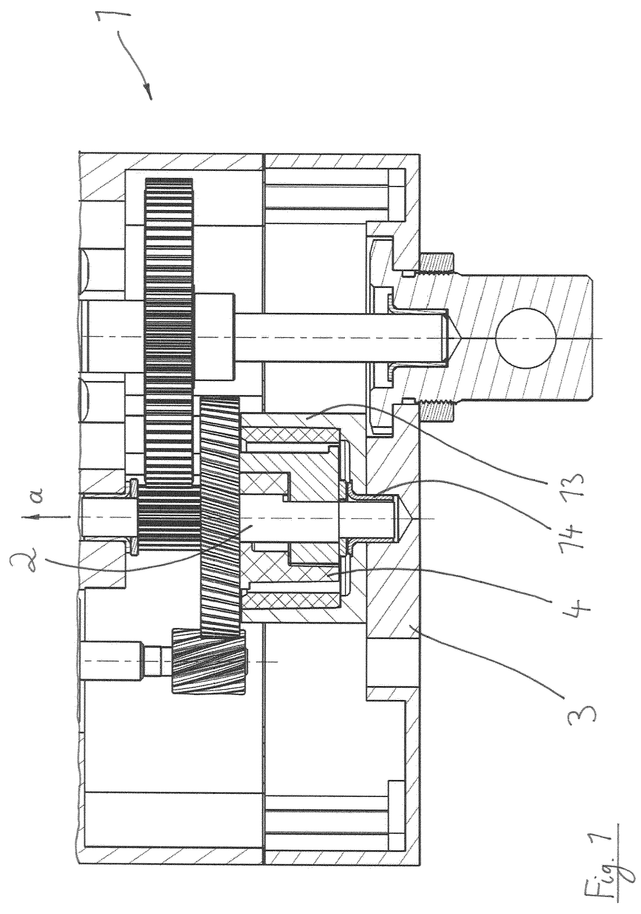

In Fig. 1 ist eine Getriebeanordnung 1 im Schnitt dargestellt, die den prinzipiellen Aufbau illustriert. Die Getriebeanordnung 1 hat ein Gehäuseelement 3, in dem mehrere Getriebewellen gelagert sind, die über kämmende Verzahnungen miteinander verbunden sind. Wesentlich ist, dass eine der Getriebewellen, nämlich die Getriebewelle 2, mit einem mechanischen Bremselement 4 verbunden ist, so dass die Getriebewelle 2 und somit sämtlich Wellen bei Bedarf abgebremst werden können. Das Bremselement hat ein hohlzylindrisches Gehäuse 13. Die Getriebewelle 2 dreht dabei um eine Drehachse a und ist mit ihrem einen axialen Ende in einem Lagerelement 14 gelagert, das hier als Gleitlagerbuchse ausgebildet ist.

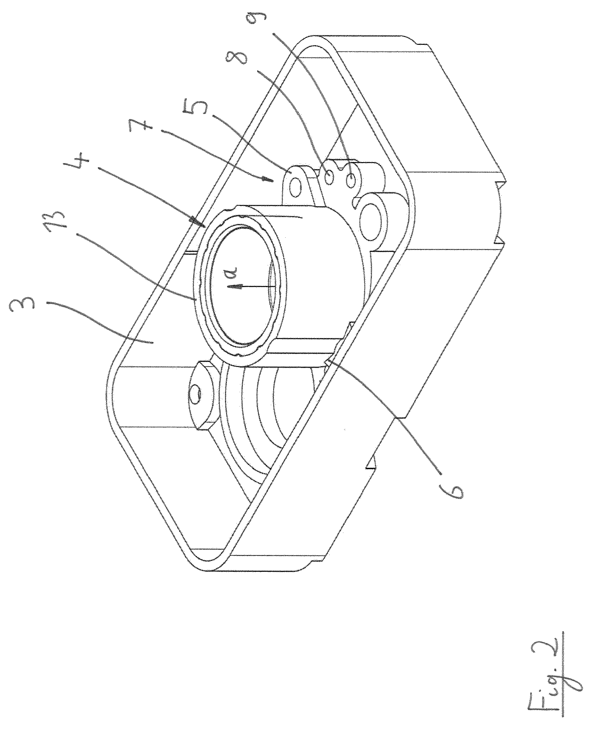

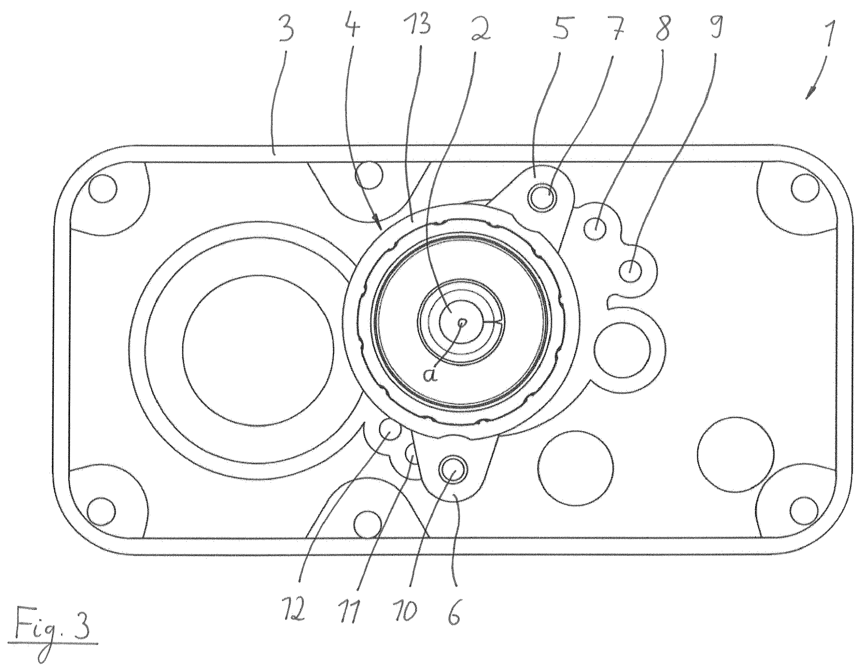

Weitere Details zum Anordnung des Bremselements 4 im Gehäuseelement 3 gehen aus den Figuren 2 bis 4 hervor.

In den genannten Figuren ist zu erkennen, dass das Bremselement 4 mit flanschartig radial nach außen ragenden Befestigungselementen 5 und 6 versehen ist. Diese sind ausgebildet, an Befestigungsstellen 7, 8, 9, 10, 11, 12 im Gehäuseelement 3 festgelegt, d.h. festgeschraubt zu werden. D. h. die drehfeste Befestigung des Bremselements 4 im Gehäuseelement 3 erfolgt mittels der beiden Befestigungselemente 5 und 6, die von der Drehachse a radial beabstandet sind und die an den korrespondierenden Befestigungsstellen des Gehäuseelements festgelegt werden.

Wesentlich dabei ist, dass mehr Befestigungsstellen 7, 8, 9, 10, 11, 12 - im Ausführungsbeispiel also 6 Befestigungsstellen - am Gehäuseelement 3 vorhanden sind als Befestigungselemente 5, 6. Damit ergibt sich die Möglichkeit, dass das Bremselement 4 in verschiedenen Positionen betreffend die Lage der Drehachse a am Gehäuseelement 3 festlegbar ist.

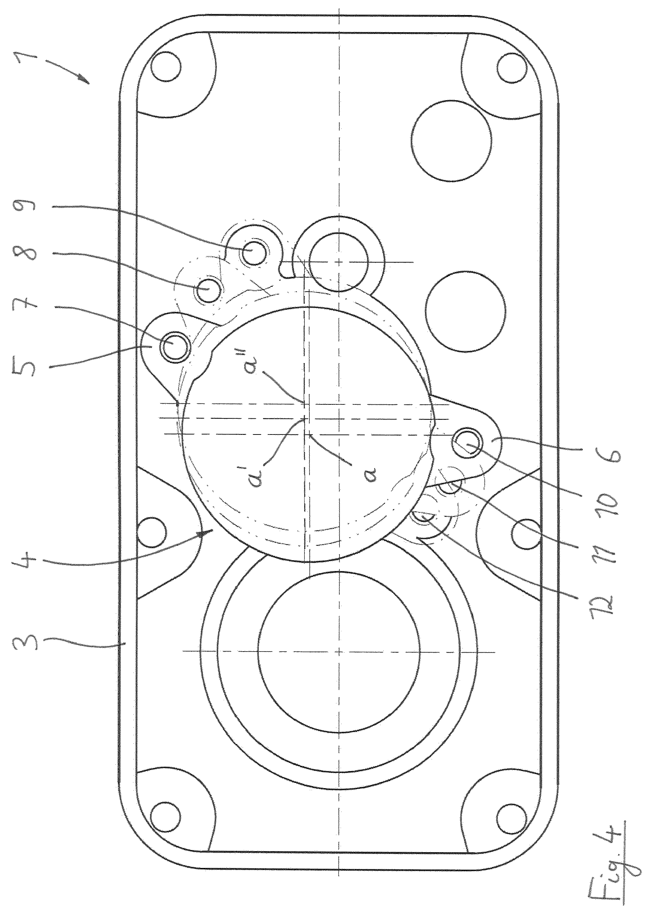

Dies ist in Fig. 4 illustriert: Hier ist das Bremselement 4 mit seinen beiden Befestigungselementen 5 und 6 mit ausgezogenen Linien in einer Lage dargestellt, in der eine Lagerung um die Drehachse a, d. h. in einer ersten Lage der Drehachse, bewerkstelligt wird. Die Befestigungselemente 5 und 6 sind hier an den Befestigungsstellen 7 und 10 festgelegt.

Indes ist mit strichpunktierten Linien in Fig. 4 angedeutet, dass die beiden Befestigungselemente 5 und 6 auch einmal an den Befestigungsstellen 8 und 11 und einmal an den Befestigungsstellen 9 und 12 festgelegt, d. h. festgeschraubt werden können.

Somit ergibt sich im Falle dessen, dass die Befestigungsstellen 8 und 11 für die beiden Befestigungselemente 5 und 6 benutzt werden, dass die Drehachse a' in einer zweiten Lage zu liegen kommt.

Entsprechend ergibt sich für die Drehachse eine dritte Lage a", wenn die Befestigungsstellen 9 und 12 für die Befestigungselemente 5 und 6 benutzt werden.

### Bezugszeichenliste

- 1: Getriebeanordnung
- 2: Getriebewelle
- 3: Gehäuseelement
- 4: Bremselement
- 5: Befestigungselement
- 6: Befestigungselement
- 7: Befestigungsstelle
- 8: Befestigungsstelle
- 9: Befestigungsstelle
- 10: Befestigungsstelle
- 11: Befestigungsstelle
- 12: Befestigungsstelle
- 13: Gehäuse des Bremselements
- 14: Lagerelement
- a: Drehachse (erste Lage)
- a': zweite Lage der Drehachse
- a": dritte Lage der Drehachse

## Patentansprüche

1. Getriebeanordnung (1), umfassend mindestens eine Getriebewelle (2), die um eine Drehachse (a) drehbar in einem Gehäuseelement (3) angeordnet ist, wobei die Getriebewelle (2) konzentrisch mit einem Bremselement (4) verbunden ist, wobei das Bremselement (4) drehfest im Gehäuseelement (3) angeordnet ist, so dass mittels des Bremselements (4) zwischen der Getriebewelle (2) und dem Gehäuseelement (3) ein Bremsdrehmoment übertragen werden kann,
**dadurch gekennzeichnet,**
**dass** die drehfeste Befestigung des Bremselements (4) im Gehäuseelement (3) mittels mindestens zweier Befestigungselemente (5, 6) erfolgt, die von der Drehachse (a) radial beabstandet sind und die an korrespondierenden Befestigungsstellen (7, 8) des Gehäuseelements (3) festlegbar sind, wobei mehr Befestigungsstellen (9, 10, 11, 12) am Gehäuseelement (3) als Befestigungselemente (5, 6) vorhanden sind, so dass das Bremselement (4) in verschiedenen Positionen betreffend die Lage der Drehachse (a, a', a") am Gehäuseelement (3) festlegbar ist.

2. Getriebeanordnung nach Anspruch 1, **dadurch gekennzeichnet, dass** das Bremselement (4) ein Gehäuse (13) aufweist, an dem radial herausragend die Befestigungselemente (5, 6) angeordnet sind.

3. Getriebeanordnung nach Anspruch 2, **dadurch gekennzeichnet, dass** das Gehäuse (13) des Bremselements (4) eine im wesentlichen hohlzylindrische Form aufweist.

4. Getriebeanordnung nach Anspruch 2 oder 3, **dadurch gekennzeichnet, dass** die Befestigungselemente (5, 6) und das Gehäuse (13) einstückig ausgebildet sind.

5. Getriebeanordnung nach einem der Ansprüche 1 bis 4, **dadurch gekennzeichnet, dass** die Befestigungselemente (5, 6) als flanschartige Laschen ausgebildet sind.

6. Getriebeanordnung nach einem der Ansprüche 1 bis 5, **dadurch gekennzeichnet, dass** die Befestigungselemente (5, 6) mit den Befestigungsstellen (7, 8, 9, 10, 11, 12) verschraubt sind.

7. Getriebeanordnung nach einem der Ansprüche 1 bis 6, **dadurch gekennzeichnet, dass** zwei Befestigungselemente (5, 6) und vier oder sechs Befestigungsstellen (7, 8, 9, 10, 11, 12) vorhanden sind.

8. Getriebeanordnung nach einem der Ansprüche 1 bis 7, **dadurch gekennzeichnet, dass** die Befestigungsstellen (7, 8, 9, 10, 11, 12) so am oder im Gehäuseelement (3) angeordnet sind, dass die Lage der Drehachse (a) beim Anbringen der Befestigungselemente (5, 6) an unterschiedlichen Befestigungsstellen (7, 8, 9, 10, 11, 12) um maximal 15 mm, vorzugsweise um maximal 5 mm, variiert.

9. Getriebeanordnung nach einem der Ansprüche 1 bis 8, **dadurch gekennzeichnet, dass** die Getriebewelle (2) mit einem ihrer axialen Enden in einem Lagerelement (14) gelagert ist, das das Bremselement (4) zumindest teilweise durchsetzt oder im Bremselement angeordnet ist und im Gehäuseelement (3) befestigt ist.

10. Getriebeanordnung nach Anspruch 9, **dadurch gekennzeichnet, dass** das Lagerelement (14) ein Wälzlager oder eine Gleitlagerbuchse ist.
